# EUROPÄISCHE PATENTSCHRIFT

(11) **EP 3 004 585 B1**
(45) Veröffentlichungstag und Bekanntmachung des Hinweises auf die Patenterteilung: **19.10.2016**
(21) Anmeldenummer: 14721264.1
(22) Anmeldetag: 17.04.2014
(51) Int. Cl.: F02B 25/14, F02D 13/02, F02B 37/12, F02B 1/12, F02B 37/013, F02B 39/10

(54) **VERFAHREN ZUM BETREIBEN EINER BRENNKRAFTMASCHINE**
METHOD FOR OPERATING AN INTERNAL COMBUSTION ENGINE
PROCÉDÉ SERVANT À FAIRE FONCTIONNER UN MOTEUR À EXPLOSION

(30) Priorität: 24.05.2013 DE 102013008826
(43) Veröffentlichungstag der Anmeldung: 13.04.2016
(73) Patentinhaber: Volkswagen Aktiengesellschaft, 38440 Wolfsburg (DE)
(72) Erfinder: GROENENDIJK, Axel, 38518 Gifhorn (DE); BLEI, Ingo, 38102 Braunschweig (DE); WESTENDORF, Johannes, 3810a Braunschweig (DE); SCHMIDT, Thorsten, 38106 Braunschweig (DE); KAMMEYER, Jasper, 30169 Hannover (DE)
(86) Internationale Anmeldenummer: PCT/EP2014/057967
(87) Internationale Veröffentlichungsnummer: WO 2014/187625

(56) Entgegenhaltungen:
- DE-A1-102011 114 065
- JP-A- H09 317 520
- US-A1- 2009 194 080
- US-A1- 2011 174 249

## Beschreibung

Die Erfindung betrifft ein Verfahren zum Betreiben einer Brennkraftmaschine gemäß dem Oberbegriff des Anspruchs 1.

Es ist bekannt, Brennkraftmaschinen, wie sie beispielsweise für den Antrieb von Kraftfahrzeugen genutzt werden, mit einer Aufladung durch beispielsweise Abgasturbolader auszustatten. Durch die Aufladung wird der Druck des einem Verbrennungsmotor der Brennkraftmaschine zugeführten Frischgases erhöht, wodurch sich die Füllung der Brennräume, damit die Menge des pro Arbeitstakt umsetzbaren Kraftstoffs und folglich die Leistung der Brennkraftmaschine erhöht. Zusätzlich kann durch eine Aufladung der Wirkungsgrad insbesondere einer Diesel-Brennkraftmaschine erhöht werden.

Die Leistungssteigerung einer Brennkraftmaschine mittels eines Abgasturboladers ist bei niedrigen Drehzahlen unter anderem durch die sogenannte Pumpgrenze des Verdichters des Abgasturboladers begrenzt. Die Pumpgrenze stellt den Übergang vom stabilen zum instabilen Betriebsbereich dar, wobei in dem instabilen Betriebsbereich die Förderung des Frischgasmassenstroms, ausgelöst durch einen regelmäßig am Eintritt des Verdichterlaufrads erfolgenden Strömungsabriss, periodisch unterbrochen wird.

Eine Verschiebung der Pumpgrenze zu geringeren Frischgasmassenströmen kann grundsätzlich durch Verdichter mit kleinerem Durchsatz erreicht werden, die jedoch dann hinsichtlich des maximalen Durchsatzes bis zum Erreichen der Stopfgrenze limitiert sind. Diese Problematik wird in der Praxis häufig dadurch umgangen, dass eine Mehrfachaufladung vorgesehen wird, wobei entweder zwei vergleichsweise kleine Abgasturbolader parallel geschaltet sind, die gemeinsam einen ausreichenden Durchsatz für den Frischgasmassenstrom bereitstellen, oder ein kleiner und ein großer Abgasturbolader seriell geschaltet sind, wobei bei niedrigen Abgas- und Frischgasmassenströmen nur der kleinere und bei sehr hohen Abgas- und Frischgasmassenströmen nur der größere der beiden Abgasturbolader betrieben wird.

Bekannt ist auch, anstelle einer Aufladung mittels mehrerer Abgasturbolader einen Abgasturbolader durch einen mechanisch oder elektrisch angetriebenen Zusatzverdichter zu unterstützen, wobei elektrisch angetriebene Zusatzverdichter (sogenannte "E-Booster") den Vorteil einer einfachen Bauweise und sowie einer guten Ein- und Ausschaltbarkeit aufweisen. Dadurch sind diese gut für eine lediglich temporäre Unterstützung verwendbar. Nachteilig an E-Boostern ist der hohe Verbrauch an elektrischer Energie, die, um die auftretenden Stromstärken zu begrenzen, regelmäßig mit einer elektrischen Spannung bereitgestellt werden muss, die über den üblichen 12 V oder 24 V eines herkömmlichen Bordnetzes von Kraftfahrzeugen liegt.

Weiterhin ist aus der US 2009/0194080 A1 bekannt, bei einer Diesel-Brennkraftmaschine ein sogenanntes "Scavenging" umzusetzen, bei dem durch eine Überschneidung der Öffnungszeiten der Einlass- und Auslassventile der einzelnen Zylinder in Zeiten eines lokalen Überdrucks in dem Frischgasstrang im Vergleich zu dem lokalen Druck im Abgasstrang Abgas, das in den Zylindern verblieben ist, und gegebenenfalls etwas Frischgas in den Abgasstrang abzuführen. Bei der Brennkraftmaschine gemäß der US 2009/0194080 A1 erfolgt dies durch schaltbare Zusatznocken für die Einlassventile, die bei einem Betrieb der Brennkraftmaschine in einem dafür vorgesehenen Betriebsbereich (niedrige Drehzahlen mit mittleren bis hohen Lasten) aktiviert werden und ein zusätzliches Öffnen der Einlassventile während des Auslasstakts und somit in Überschneidung mit einem Öffnen der Auslassventile bewirken. Durch das Scavenging wird zum einen die Füllung der Brennräume verbessert, da das darin enthaltene Abgas durch Frischgas ersetzt wird. Zudem kann durch den erhöhten Gasdurchsatz durch die Brennkraftmaschine auch die Pumpgrenze des Verdichters des Abgasturboladers verschoben werden.

Aus der US 2011/0174249 A1 ist weiterhin bekannt, basierend auf dem aus der US 2009/0194080 A1 bekannten System, die Öffnungszeiten der Einlassventile während des Einlasstakts so zu verändern, dass diese entweder vor oder nach dem unteren Totpunkt des Kolbens ihre Schließstellung erreichen. Dadurch soll eine Absenkung des Abgasdrucks erreicht werden, wodurch das Druckgefälle zwischen dem Frischgasstrang und dem Abgasstrang, das für das Scavenging erforderlich ist, vergrößert werden kann. Dies soll die Durchführung von Scavenging bei niedrigen Lasten ermöglichen. Alternativ dazu ist in der US 2011/0174249 A1 zudem offenbart, einen Zusatzverdichter vorzusehen, der bei einem Betrieb des Verbrennungsmotors mit niedrigen bis mittleren Lasten für den erhöhten Saugrohrdruck sorgt, der für das Scavenging erforderlich ist. Der Zusatzverdichter soll dabei mechanisch oder auch elektrisch angetrieben sein können.

Aus der DE 199 08 286 A1 ist weiterhin ein Ventiltrieb bekannt, bei dem ein rohrförmiger Nockenträger drehfest und axial verschiebbar auf einer Grundwelle angeordnet ist. Der Nockenträger bildet axial versetzt zwei Nocken mit unterschiedlichen Nockenlaufbahnen aus. Durch das axiale Verschieben des Nockenträger auf der Grundwelle kann ein Gaswechselventil durch die unterschiedlich geformten Nockenlaufbahnen in unterschiedlicher Weise betätigt werden. Ein solcher Ventiltrieb eignet sich auch für ein zusätzliches Öffnen des Einlassventils während des Auslasstakts zur Realisierung von Scavenging.

Das Dokument DE 10 2012 009 288 A1 zeigt eine Brennkraftmaschine mit einem Abgasturbolader mit variabler Turbinengeometrie und einem elektrisch betriebenen Verdichter und ein Verfahren zum Betreiben dieser Brennkraftmaschine. Das Verfahren sieht vor, den Verdichter ausschließlich im transienten Betrieb und insbesondere bei einer erhöhten Lastanforderung aus einem durch eine geringe Last gekennzeichneten Betriebszustand heraus zuzuschalten. Sobald durch den Abgasturbolader selbst ein ausreichendes Spülgefälle von dem Ansaugtrakt zu dem Abgastrakt erreicht wird, soll der elektrisch betriebene Verdichter wieder abgeschaltet werden. Das Verfahren wird für eine Brennkraftmaschine vorgeschlagen, welche nach dem Otto-Prinzip arbeitet, da bei einer derartigen Brennkraftmaschine durch die beim Otto-Prinzip übliche Ventilüberschneidung im Bereich des oberen Totpunkts ein Scavenging bei entsprechendem Spülgefälle ohne weiteren technischen Aufwand abläuft.

Ausgehend von diesem Stand der Technik lag der Erfindung die Aufgabe zugrunde, bei einer Brennkraftmaschine, insbesondere Diesel-Brennkraftmaschine, eine Leistungssteigerung bei niedrigen Drehzahlen durch eine Erhöhung des maximalen Drehmoments bei diesen Drehzahlen zu erreichen.

Diese Aufgabe wird durch ein Verfahren zum Betreiben einer Brennkraftmaschine gemäß dem unabhängigen Patentanspruch 1 gelöst. Vorteilhafte Ausführungsformen des erfindungsgemäßen Verfahrens sind Gegenstand der abhängigen Patentansprüche und ergeben sich aus der nachfolgenden Beschreibung der Erfindung.

Ein erfindungsgemäßes Verfahren zum Betreiben einer Brennkraftmaschine, die einen Verbrennungsmotor, einen Frischgasstrang, einen Abgasstrang, einen Abgasturbolader mit einem in den Frischgasstrang integrierten Verdichter und einer in den Abgasstrang integrierten Turbine, sowie einen in den Frischgasstrang integrierten, vorzugsweise elektrisch angetriebenen Zusatzverdichter, umfasst, wobei (temporär) ein Scavenging durchgeführt wird, indem bei einem Überdruck in dem Frischgasstrang stromab des Verdichters im Vergleich zu dem Druck in dem Abgasstrang stromauf der Turbine ein Spülen von in einem Brennraum des Verbrennungsmotors vorhandenem Verbrennungsgas durch ein gleichzeitiges Öffnen (mindestens) eines dem Brennraum zugeordneten Einlassventils und (mindestens) eines dem Brennraum zugeordneten Auslassventils des Verbrennungsmotors erfolgt, ist dadurch gekennzeichnet, dass bei einem Lastsprung zunächst der Zusatzverdichter aktiviert wird und anschließend das Scavenging mittels eines zusätzlichen Öffnens des Einlassventils während des Auslasstakts durch einen schaltbaren Ventiltrieb durchgeführt wird.

Der Erfindung liegt demnach der Gedanke zugrunde, die Vorteile, die ein Zusatzverdichter zum einen sowie das Scavenging zum anderen auf die Füllung der Brennräume sowie die Pumpgrenze des Verdichters eines Abgasturboladers haben können, in vorteilhafterweise zu kombinieren. Dabei wird der Zusatzverdichter dafür eingesetzt, nach einem Lastsprung, d.h. einer spontanen deutlichen Erhöhung der Lastanforderung an die Brennkraftmaschine, schnell ein relativ hohes Druckniveau in dem Frischgasstrang zu erzeugen, das die gewünschte Füllung der Brennräume verbessert. Dabei wird ein Druckniveau erzeugt, das die Durchführung von Scavenging ermöglicht. Sobald dieses Druckniveau erreicht ist und mittels Scavenging die durch den Zusatzverdichter initiierte Verschiebung der Pumpgrenze des Verdichters im Wesentlichen aufrecht gehalten werden kann, kann der Zusatzverdichter wieder abgestellt werden. Die temporäre Druckerhöhung durch den Zusatzverdichter kann dann durch ein höheres Druckverhältnis aus dem Abgasturbolader ersetzt werden, da durch die erhöhte Gasströmung mittels Scavenging die Pumpgrenze nicht mehr limitierend ist bzw. der Betriebspunkt des Verdichters stabil im Verdichterkennfeld ist. Durch den nur kurzfristigen Betrieb des Zusatzverdichters wird dessen Energieaufnahme, insbesondere die Aufnahme an elektrischer Energie bei einem elektrisch angetriebenen Zusatzverdichter, begrenzt. Auch ermöglicht dies, einen insbesondere elektrisch angetriebenen Zusatzverdichter einzusetzen, der so ausgelegt sein kann, dass er die erforderliche Maximalleistung nur kurzfristig und nicht im Dauerbetrieb aufbringen kann. Der Zusatzverdichter kann somit vergleichsweise klein und kostengünstig ausgelegt werden.

Demnach kann insbesondere vorgesehen sein, dass der Zusatzverdichter vor oder mit dem Beginn des Scavenging wieder deaktiviert wird. Bei einer Deaktivierung vor dem Beginn des Scavenging sollte sichergestellt werden, dass das für die Durchführung von Scavenging erforderlich Druckniveau in dem Frischgasstrang (hinter dem Verdichter des Abgasturboladers und insbesondere direkt vor dem Verbrennungsmotor, insbesondere in einem Saugrohr der Brennkraftmaschine) bis zur Einleitung des Scavenging erreicht wird (z.B. durch ein Nachlaufen des deaktivierten Zusatzverdichters) oder aufrecht gehalten wird.

Demnach kann besonders vorteilhaft vorgesehen sein, dass der Zusatzverdichter deaktiviert wird, wenn zumindest temporär ein das Scavenging ermöglichendes Druckgefälle zwischen dem Frischgasstrang und dem Abgasstrang eingestellt ist, wobei insbesondere das lokale Druckgefälle von p₂ (Saugrohrdruck) zu p₃ (Abgasgegendruck vor der Turbine des Abgasturboladers) relevant ist.

Das erfindungsgemäße Verfahren kann insbesondere dann durchgeführt werden, wenn der Lastsprung bei Drehzahlen des Verbrennungsmotors zwischen ca. 800 1/Min und ca. 2000 1/Min erfolgt, da in diesem Drehzahlbereich in Kombination mit der zunächst niedrigen Last der Abgasturbolader aufgrund des geringen Abgas- und Frischgasmassenstroms nicht schnell genug für eine ausreichende Druckerhöhung im Frischgasstrang, die auch für das Scavenging erforderlich ist, sorgen kann. Diese Druckerhöhung kann dann erfindungsgemäß schnell mittels des Zusatzverdichters eingestellt werden.

Die Erfindung wird nachfolgend anhand eines in den Zeichnungen dargestellten Ausführungsbeispiels näher erläutert. In den Zeichnungen zeigt:
- Fig. 1:: eine Brennkraftmaschine, die mittels eines erfindungsgemäßen Verfahrens betrieben werden kann;
- Fig. 2:: schematisch die Auswirkung des Zusatzverdichter auf den Betrieb des Verdichters des Abgasturboladers;
- Fig. 3:: schematisch die Auswirkung von Scavenging auf den Betrieb des Verdichters des Abgasturboladers; und
- Fig. 4:: schematisch die Erhöhung des Drehmoments des Verbrennungsmotors der Brennkraftmaschine durch den Betrieb gemäß einem erfindungsgemäßen Verfahren.

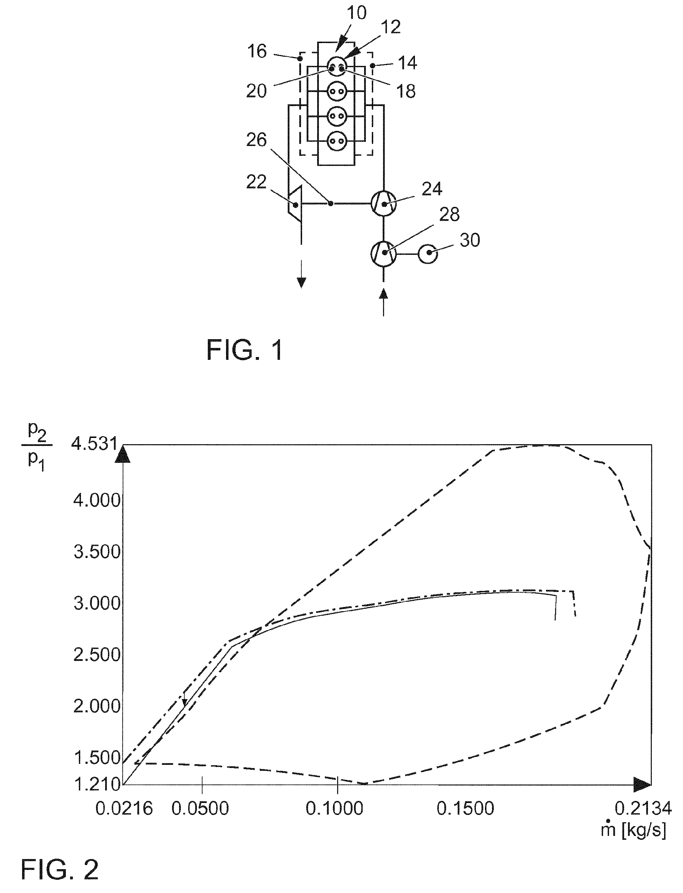

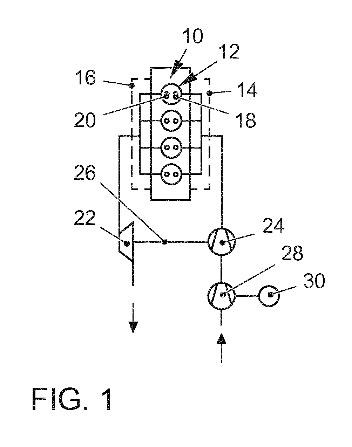

In der Fig. 1 ist stark vereinfacht eine Brennkraftmaschine dargestellt, die gemäß eines erfindungsgemäßen Verfahren betrieben werden kann. Mittels der Brennkraftmaschine kann beispielsweise ein Kraftfahrzeug angetrieben werden.

Die Brennkraftmaschine umfasst einen Verbrennungsmotor 10, der nach dem Diesel-Prinzip betrieben wird. Der Verbrennungsmotor 10 bildet in einem Verbund aus Zylinderkurbelgehäuse und Zylinderkopf mehrere (z.B. vier) Zylinder 12 aus. Die Zylinder sind einlassseitig mit einem Saugrohr 14 eines Frischgasstrangs und ausgangsseitig mit einem Abgaskrümmer 16 eines Abgasstrangs gasführend verbunden. In bekannter Weise wird in Brennkammern, die von den Zylindern 12 in Verbindung mit in den Zylinder 12 auf und ab geführten Kolben ausgebildet sind, Luft mit Kraftstoff verbrannt. Das dabei entstehende Abgas wird über den Abgasstrang abgeführt. Die Zufuhr der Luft in die Brennräume und die Abfuhr des Abgases aus den Brennräumen wird über mindestens jeweils ein Einlassventil 18 und ein Auslassventil 20 gesteuert, die von einem nicht dargestellten Ventiltrieb des Verbrennungsmotors 10 betätigt werden.

Die Brennkraftmaschine umfasst weiterhin einen Abgasturbolader. Dieser weist eine in den Abgasstrang integrierte Turbine 22 sowie einen in den Frischgasstrang integrierten Verdichter 24 auf. Ein von dem Abgasstrom rotierend angetriebenes Laufrad der Turbine 22 treibt über eine Welle 26 ein Laufrad des Verdichters 24 an. Die so bewirkte Rotation des Laufrads des Verdichters 24 verdichtet das durch diesen hindurch geführte Frischgas.

Stromauf des Verdichters 24 des Abgasturboladers ist ein Zusatzverdichter 28 in den Frischgasstrang integriert. Der Zusatzverdichter 28 wird von einem Elektromotor 30 angetrieben. Alternativ kann der Zusatzverdichter 28 aber auch stromab des Verdichters 24 angeordnet sein.

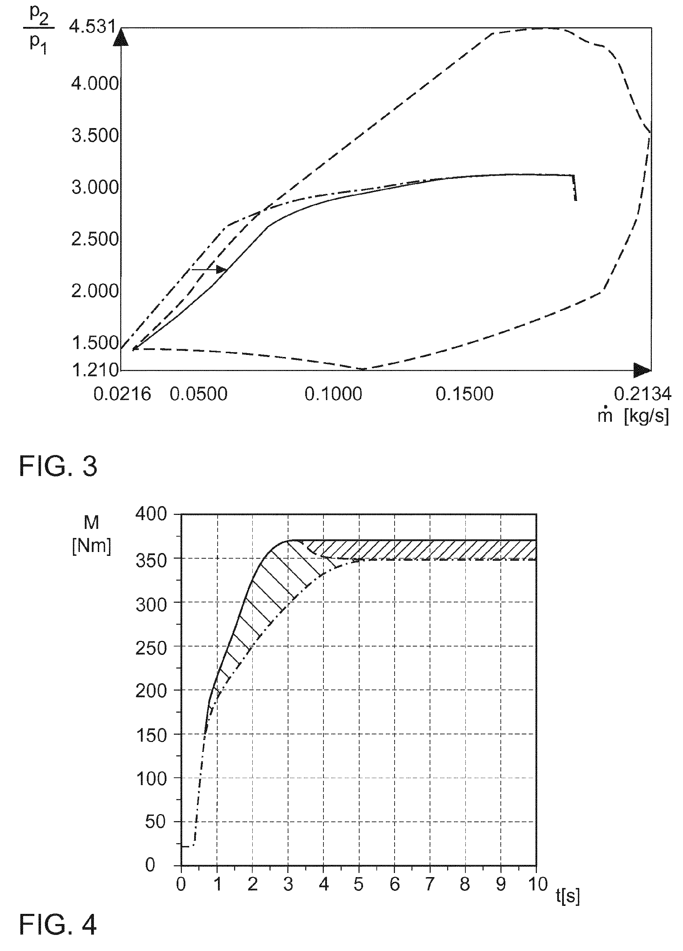

Bei niedrigen Drehzahlen des Verbrennungsmotors 10 wird das maximale von diesem abgegebene Drehmoment unter anderem durch die Pumpgrenze des Verdichters 24 des Abgasturboladers begrenzt. Diese Pumpgrenze ist in den Diagrammen gemäß den Fig. 2 und 3 dargestellt. Die Diagramme tragen das Druckverhältnis p₂/p₁ (p₂: Druck stromab des Verdichters; p₁: Druck stromauf des Verdichters) über dem Massenstrom ṁ durch den Verdichter 24 auf. Der von der gestrichelten Line umgrenzte Bereich ist das Verdichterkennfeld, innerhalb dessen der Verdichter stabil betrieben werden kann. Die Pumpgrenze ist die linksseitige, d.h. zu niedrigen Massenströmen hin angeordnete Grenze des Verdichterkennfelds.

Die strichpunktierte Linie in den Diagrammen der Fig. 2 und 3 stellt den Betrieb des Verdichters dar, wie er sich bei einer beispielhaften Brennkraftmaschine gemäß der Fig. 1 bei deaktiviertem Zusatzverdichter und ohne die Durchführung von Scavenging ergeben würde. Es zeigt sich, dass über einen relativ großen Bereich der Betrieb außerhalb der Pumpgrenze des Verdichterkennfelds erfolgt bzw. erfolgen müsste.

Die durchgehende Linie in der Fig. 2 zeigt den positiven Effekt, den der Zusatzverdichter 28 auf den Betrieb des Verdichters 24 des Abgasturboladers haben kann. Der Zusatzverdichter 28 bewirkt durch die Anordnung auf der Niederdruckseite des Verdichters 24 eine Druckerhöhung auf dieser Seite, d.h. von p₁. Dadurch verringert sich das Verhältnis von p₂ zu p₁, so dass sich bei gleichbleibendem Massenstrom ṁ die Betriebskennlinie nach unten verschiebt und sich dadurch der Pumpgrenze annähert oder sogar innerhalb des Verdichterkennfelds liegen kann.

Die durchgehende Linie in der Fig. 3 zeigt dagegen den positiven Effekt, den das Scavenging auf den Betriebs des Verdichters 24 des Abgasturboladers haben kann. Das Scavenging bewirkt einen erhöhten Massenstrom ṁ durch den Verbrennungsmotor 10 und damit auch durch den Frischgasstrang. Durch den größeren Massenstrom ṁ durch den Verdichter verschiebt sich dessen Betriebskennlinie nach rechts und liegt dadurch näher an der Pumpgrenze bzw. sogar innerhalb des Verdichterkennfelds.

Erfindungsgemäß ist vorgesehen, bei einem Betrieb der Brennkraftmaschine mit niedrigen Drehzahlen (ca. 800 1/Min bis ca. 2000 1/Min), sofern in einem Lastsprung eine spontane, deutlich erhöhte Lastanforderung gegeben ist, zunächst den Zusatzverdichter 28 zu aktivieren. Dieser bewirkt sehr schnell eine Druckerhöhung im Frischgasstrang und damit eine verbesserte Füllung der Brennräume, die durch eine entsprechende Erhöhung des in den Brennräumen umgesetzten Kraftstoffs zu einer Erhöhung des maximalen Drehmoments des Verbrennungsmotors führen kann. Durch den positiven Effekt auf den Betrieb des Verdichters 24 des Abgasturboladers wird zudem erreicht, dass dieser sehr schnell selbst für eine Druckerhöhung sorgen kann, die den Einsatz von Scavenging möglich macht. Hierzu ist nämlich lokal ein höherer Druck im Saugrohr (p₂) als im Abgaskrümmer (p₃) erforderlich.

Sobald dieses Druckgefälle erreicht wird, ist vorgesehen, ein Scavenging einzuleiten. Hierzu wird mittels des Ventiltriebs, der beispielsweise als schaltbarer Ventiltrieb gemäß der DE 199 08 286 A1 ausgebildet sein kann, ein zusätzliches Öffnen der Einlassventile 18 während des jeweiligen Auslasstakts realisiert. Durch die so erzeugte Ventilüberschneidung kann Abgas, das in den Brennräumen verblieben ist, durch Frischgas ersetzt werden. Dadurch wird nicht nur die Füllung der Brennräume mit Frischgas sondern auch der Gasdurchsatz durch die Brennkraftmaschine verbessert. Der erhöhte Gasdurchsatz kann, wie dies anhand der Fig. 3 beschrieben wurde, den Betrieb des Verdichters 24 des Abgasturboladers positiv beeinflussen, was wiederum die Füllung der Brennräume verbessern kann.

Der schaltbare Ventiltrieb umfasst axial bewegliche Nockenvorrichtungen, welche auf Nockenwellen des Verbrennungsmotors 10 gelagert sind. Die Nockenvorrichtungen weisen mehrere axial nebeneinander angeordnete Nockenspuren auf. Eine Nockenspur weist einen üblichen Hauptnocken für den Haupthub des Einlassventils 18 auf. Eine axial nebenliegende Nockenspur weist zusätzlich einen Zusatzhub auf, so dass das Einlassventil 18 zusätzlich zu dem Haupthub ein zusätzliches Öffnen während des Auslasstakts durchführt. Die verschiedenen Nockenspuren können durch Axialverschiebung der Nockenvorrichtung wahlweise über einen Nockenfolger, insbesondere einen Rollenschlepphebel, das Einlassventil 18 betätigen. Die Axialverschiebung der Nockenvorrichtung wird vorzugsweise durch Schaltmittel, welche von einem Steuergerät des Verbrennungsmotors angesteuert werden, durchgeführt.

Erfindungsgemäß ist vorgesehen, den Zusatzverdichter 28 dazu zu verwenden, nach einem Lastsprung aus niedrigen Drehzahlen heraus, das notwendige Druckgefälle für die Durchführung von Scavenging möglichst schnell zu erreichen und die Füllung der Brennräume zu verbessern, so lange eine Füllungsverbesserung durch das Scavenging noch nicht zur Verfügung steht. Sobald das Scavenging eingeleitet wird, wird der Zusatzverdichter deaktiviert, um dessen Energieaufnahme zu begrenzen. Dessen positive Beeinflussung der Füllung der Brennräume wird dann von dem Scavenging übernommen, wie dies schematisch in der Fig. 4 dargestellt ist.

Dort kennzeichnet die strichpunktierte Linie den Verlauf des Drehmoments M (auf der Hochachse) über der Zeit t (auf der Rechtsachse), sofern die Brennkraftmaschine sowohl ohne Zusatzverdichtung als auch ohne Scavenging aus einem Betriebspunkt mit niedriger Last und niedrigen Drehzahlen heraus belastet würde. Die durchgehende Linie zeigt den entsprechenden Verlauf des Drehmoments mit beiden Maßnahmen in der erfindungsgemäßen Kombination. Die erste Erhöhung des Drehmoments ist auf den Betrieb des Zusatzverdichters zurückzuführen (vgl. linksschraffierter Bereich), während diese später durch das Scavenging (vgl. rechtsschraffierter Bereich) aufrechtgehalten wird. Mit Beginn des Scavenging wird der Zusatzverdichter deaktiviert. Dessen Einfluss auf die Füllung und damit das Drehmoment reduziert sich kontinuierlich in einem Übergangsbereich (innerhalb dessen der Zusatzverdichter ausläuft).

### Bezugszeichenliste

- 10: Verbrennungsmotor
- 12: Zylinder
- 14: Saugrohr
- 16: Abgaskrümmer
- 18: Einlassventil
- 20: Auslassventil
- 22: Turbine
- 24: Verdichter
- 26: Welle
- 28: Zusatzverdichter
- 30: Elektromotor

## Patentansprüche

1. Verfahren zum Betreiben einer Brennkraftmaschine mit einem Verbrennungsmotor (10) einem Frischgasstrang, einem Abgasstrang, einem Abgasturbolader mit einem in den Frischgasstrang integrierten Verdichter (24) und einer in den Abgasstrang integrierten Turbine (22), sowie mit einem in den Frischgasstrang integrierten Zusatzverdichter (28), wobei ein Scavenging durchgeführt wird, indem bei einem Überdruck in dem Frischgasstrang stromab des Verdichters (24) im Vergleich zu dem Druck in dem Abgasstrang stromauf der Turbine (22) ein Spülen von in einem Brennraum des Verbrennungsmotors (10) vorhandenem Verbrennungsgas durch ein gleichzeitiges Öffnen eines Einlassventils (18) und eines Auslassventils (20) erfolgt, **dadurch gekennzeichnet, dass** bei einem Lastsprung zunächst der Zusatzverdichter (28) aktiviert wird und anschließend das Scavenging mittels eines zusätzlichen Öffnens des Einlassventils (18) während des Auslasstakts durch einen schaltbaren Ventiltrieb durchgeführt wird.

2. Verfahren gemäß Anspruch 1, **dadurch gekennzeichnet, dass** der Zusatzverdichter (28) vor oder mit dem Beginn des Scavenging wieder deaktiviert wird.

3. Verfahren gemäß Anspruch 2, **dadurch gekennzeichnet, dass** der Zusatzverdichter (28) deaktiviert wird, wenn zumindest temporär ein das Scavenging ermöglichendes Druckgefälle zwischen Frischgasstrang und Abgasstrang eingestellt ist.

4. Verfahren gemäß einem der vorhergehenden Ansprüche, **dadurch gekennzeichnet, dass** der Zusatzverdichter (28) nur aktiviert wird, wenn der Lastsprung bei Drehzahlen des Verbrennungsmotors (10) zwischen ca. 800 1/Min und ca. 2000 1/Min erfolgt.

5. Verfahren gemäß einem der vorhergehenden Ansprüche, **dadurch gekennzeichnet, dass** der Zusatzverdichter (28) elektrisch angetrieben wird.

## Claims

1. Method for operating a combustion engine having an internal combustion engine (10), having a fresh-gas tract, having an exhaust tract, having an exhaust-gas turbocharger with a compressor (24) integrated into the fresh-gas tract and with a turbine (22) integrated into the exhaust tract, and having an auxiliary compressor (28) integrated into the fresh-gas tract, wherein scavenging is performed in that, in the presence of a positive pressure in the fresh-gas tract downstream of the compressor (24) in relation to the pressure in the exhaust-gas tract upstream of the turbine (22), purging of combustion gas present in a combustion chamber of the internal combustion engine (10) is realized by virtue of an inlet valve (18) and an outlet valve (20) being open simultaneously, **characterized in that**, in the event of a load jump, it is firstly the case that the auxiliary compressor (28) is activated, and subsequently, the scavenging is performed by virtue of the inlet valve (18) being additionally opened during the exhaust stroke by way of a switchable valve drive.

2. Method according to Claim 1, **characterized in that** the auxiliary compressor (28) is deactivated again before or upon the commencement of the scavenging.

3. Method according to Claim 2, **characterized in that** the auxiliary compressor (28) is deactivated if a pressure gradient, which permits the scavenging, at least temporarily prevails between fresh-gas tract and exhaust tract.

4. Method according to one of the preceding claims, **characterized in that** the auxiliary compressor (28) is activated only if the load jump occurs at rotational speeds of the internal combustion engine (10) between approximately 800 rpm and approximately 2000 rpm.

5. Method according to one of the preceding claims, **characterized in that** the auxiliary compressor (28) is electrically driven.

## Revendications

1. Procédé pour faire fonctionner un moteur à explosion comprenant un moteur à combustion interne (10), une ligne de gaz frais, une ligne de gaz d'échappement, un turbocompresseur à gaz d'échappement avec un compresseur (24) intégré dans la ligne de gaz frais et une turbine (22) intégrée dans la ligne de gaz d'échappement, ainsi qu'un compresseur auxiliaire (28) intégré dans la ligne de gaz frais, une récupération étant effectuée dans le cas d'une surpression dans la ligne de gaz frais en aval du compresseur (24) par comparaison avec la pression dans la ligne de gaz d'échappement en amont de la turbine (22), en effectuant un rinçage du gaz de combustion présent dans une chambre de combustion du moteur à combustion interne (10) par ouverture simultanée d'une soupape d'admission (18) et d'une soupape d'échappement (20), **caractérisé en ce que** dans le cas d'un saut de charge, le compresseur auxiliaire (28) est tout d'abord activé et ensuite la récupération est effectuée par une commande de soupape commutable au moyen d'une ouverture supplémentaire de la soupape d'admission (18) pendant le temps d'échappement.

2. Procédé selon la revendication 1, **caractérisé en ce que** le compresseur auxiliaire (28) est à nouveau désactivé avant la récupération ou au commencement de celle-ci.

3. Procédé selon la revendication 2, **caractérisé en ce que** le compresseur auxiliaire (28) est désactivé lorsqu'un gradient de pression permettant la récupération est ajusté au moins temporairement entre la ligne de gaz frais et la ligne de gaz d'échappement.

4. Procédé selon l'une quelconque des revendications précédentes, **caractérisé en ce que** le compresseur auxiliaire (28) n'est activé que lorsque le saut de charge a lieu à des régimes du moteur à combustion interne (10) entre environ 800 t/min et environ 2000 t/min.

5. Procédé selon l'une quelconque des revendications précédentes, **caractérisé en ce que** le compresseur auxiliaire (28) est entraîné électriquement.
